# EUROPEAN PATENT SPECIFICATION

(11) **EP 3 791 989 B1**
(45) Date of publication and mention of the grant of the patent: **01.06.2022**
(21) Application number: 20195739.6
(22) Date of filing: 11.09.2020
(51) Int. Cl.: B23K 11/11, B23K 11/34

(54) **RESISTANCE WELDING METHOD AND RESISTANCE WELDING APPARATUS**
WIDERSTANDSSCHWEISSVERFAHREN UND WIDERSTANDSSCHWEISSVORRICHTUNG
PROCÉDÉ ET APPAREIL DE SOUDAGE PAR RÉSISTANCE

(30) Priority: 12.09.2019 JP 2019166224
(43) Date of publication of application: 17.03.2021
(73) Proprietor: Mazda Motor Corporation, Aki-gun, Hiroshima 730-8670 (JP)
(72) Inventor: YAMAGUCHI, Kojiro, Hiroshima 730-8670 (JP); TAKAHASHI, Katsunori, Hiroshima 730-8670 (JP); MORIWAKI, Motonori, Hiroshima 730-8670 (JP); NAKAI, Masanori, Hiroshima 730-8670 (JP); ICHIHARA, Koichiro, Hiroshima 730-8670 (JP); UJIHIRA, Naoki, Hiroshima 730-8670 (JP); SATO, Hiroki, Hiroshima 730-8670 (JP)
(74) Representative: Thoma, Michael

(56) References cited:
- EP-A1- 2 561 946
- US-A1- 2016 008 915

## Description

### BACKGROUND

The technique disclosed herein relates to a resistance welding method and a resistance welding apparatus.

There has been a well-known technology of welding a plurality of welding target members stacked on each other by supplying an electric current to them through electrodes (resistance welding). Although an electrode having a columnar shape is usually used as an electrode used for the resistance welding, there are cases of adopting an electrode having an interior electrode having a columnar shape and an exterior electrode having a tubular shape, which is arranged on the outer circumferential side of the interior electrode and distanced from the interior electrode (see, for example, Japanese Unexamined Patent Publication No. 2011-031269). Such an electrode is advantageous in welding a material having a high melting point, such as high-tensile steel. Furthermore, US 2016/0008915 A1 discloses a resistance welding method according to the preamble of claim 1, wherein a surrounding region around the connection point is heated by resistance heating prior to the two components being connected so that the ductility in the surrounding region is increased and strength is reduced. A similar concept is disclosed by document EP 25 61 946 A1.

### SUMMARY

However, in a case where at least one of the plurality of welding target members weld-joined to each other is a member having high strength and rigidity, particularly as is the case of high-tensile steel, and where a load to tear apart the joining acts on the welding target members, the stress tends to converge at the weld-joined portion (i.e., a nugget portion), because the welding target member with the high strength and rigidity is less likely to be deformed. This adversely results in an easily fractured joining portion, and a low joining strength between the plurality of welding target members.

An approach to address this issue is to use the same electrodes used for welding to generate a heat affected part on the immediately outer circumferential side of the joining portion after the welding, so as to make the joining portion easily deformable to suppress fractures in the joining portion. This method, however, has a problem that setting of conditions for supplying an electric current is difficult, and the heat affected part therefore is not stably generated because the electric current path for generating the heat affected part passes through the joining portion. As a result, the method leads to a problem that fractures in the joining portion are not stably suppressed.

The technique disclosed herein provides a resistance welding method and a resistance welding apparatus, which allow stable suppression of fractures in a joining portion of a plurality of welding target members stacked and weld-joined with each other, when a load to tear apart the joining acts on the joining portion.

The technique disclosed herein is drawn to a resistance welding method including: welding a plurality of welding target members by supplying an electric current through electrodes; and generating a fragile portion in a position of the welding target members different from a position subject to the welding by using the electrodes for welding or electrodes separate from the electrodes for the welding, before, during, or after the welding is performed.

In the resistance welding method, the generating of the fragile portion generates a fragile portion in a position of the welding target members other than the position subject to the welding by using the electrodes separate from the electrodes for the welding. Therefore, a fragile portion such as a heat affected part can be stably and easily formed. When a load to tear apart the joining acts on the welding target members joined with each other, the fragile portion deforms to restrict the stress from being converged in the weld-joined portion. This stably and easily suppresses fractures in the joining portion. Further, suppression of fractures in the joining portion improves the joining strength between the plurality of welding target members.

The resistance welding method may be such that the generating of the fragile portion generates a heat affected part as the fragile portion.

Thus, a heat affected part as the fragile portion can be stably and easily formed in a position of the welding target members other than the position subject to the welding, on an electric current path that does not pass through the joining portion.

Alternatively, the generating of the fragile portion may generate a recessed portion as the fragile portion on a surface of the welding target members.

Such a recessed portion can be stably and easily formed on a surface of the welding target members by using the electrodes for generating the fragile portion to pressurize the welding target members with a suitable electrode force while supplying an electric current to the welding target members.

The welding may weld an iron-based member and an aluminum-based member as the plurality of welding target members.

That is, when an iron-based member and an aluminum-based member are welded, a fragile intermetallic compound is formed. Due to this, fractures more easily take place in the joining portion. However, the fragile portion generated in a position of the welding target members apart from the position subject to the welding effectively suppresses fractures in the joining portion. Further, in addition to the joining portion, the iron-based member and an aluminum-based member with a highly resistant oxidation coating film may be joined with each other, by supplying an electric current from the electrodes for generating the fragile portion. Therefore, the joining strength between the iron-based member and an aluminum-based member can be further improved.

Each of the electrodes for generating the fragile portion is arranged, in accordance with the invention, in at least a part of a circumferential direction on an outer circumferential side of corresponding one of the electrodes for the welding, and is distanced from the corresponding one of the electrodes for welding.

This way, a fragile portion can be stably and easily formed on the outer circumferential side of the joining portion in the welding target members, and fractures in the joining portion can be more effectively suppressed.

Another technique disclosed herein is drawn to a resistance welding apparatus. The resistance welding apparatus includes: a welding system that welds a plurality of welding target members by supplying an electric current through electrodes; and a fragile portion generating system that generates a fragile portion in a position of the welding target members different from a position subject to the welding by using the electrodes for the welding or electrodes separate from the electrodes for welding, before, during, or after the welding by the welding system is performed.

This configuration allows stable and easy suppression of fractures in the weld-joined portion, and suppression of fractures in the joining portion improves the joining strength between the plurality of welding target members.

The fragile portion generating system may be configured to generate a heat affected part as the fragile portion.

Thus, a heat affected part as the fragile portion can be stably and easily formed in a position of the welding target members other than the position subject to the welding, on an electric current path that does not pass through the joining portion.

Alternatively, the fragile portion generating system may be configured to generate a recessed portion as the fragile portion on the surface of the welding target member.

Such a recessed portion can be stably and easily formed on a surface of the welding target members by using the electrodes for generating the fragile portion to pressurize the welding target members with a suitable electrode force while supplying an electric current to the welding target members.

The welding system may be configured to weld an iron-based member and an aluminum-based member as the plurality of welding target members.

Thus, the joining strength between the iron-based member and an aluminum-based member can be further improved.

Each of the electrodes for generating the fragile portion may be arranged in at least a part of a circumferential direction on the outer circumferential side of corresponding one of the electrodes for the welding.

This way, a fragile portion can be stably and easily formed on the outer circumferential side of the joining portion in the welding target members, and fractures in the joining portion can be more effectively suppressed.

### BRIEF DESCRIPTION OF THE DRAWINGS

FIG. 1 is a sectional view showing a main part of a resistance welding apparatus.
FIG. 2 is a diagram corresponding to FIG. 1 showing a state in which welding is taking place.
FIG. 3 is a diagram corresponding to FIG. 1 showing a state in which a fragile portion is generated by fragile portion generating electrodes.
FIG. 4 is a diagram corresponding to FIG. 1 showing a state in which the fragile portion has been generated.
FIG. 5 is a diagram corresponding to FIG. 1 showing a state in which welding electrodes and fragile portion generating electrodes are separated from the welding target members, after the fragile portion has been generated.
FIG. 6 is a perspective view showing a frame member as a specific example of the welding target members stacked and weld-joined with each other.
FIG. 7 is a perspective view showing the welding electrodes that perform welding to a flange portion of the flame member, and the fragile portion generating electrodes that generate a heat-affected portion in the flange portion.

### DETAILED DESCRIPTION

Hereinafter, an embodiment of a resistance welding apparatus and a resistance welding method will be described in detail with reference to drawings.

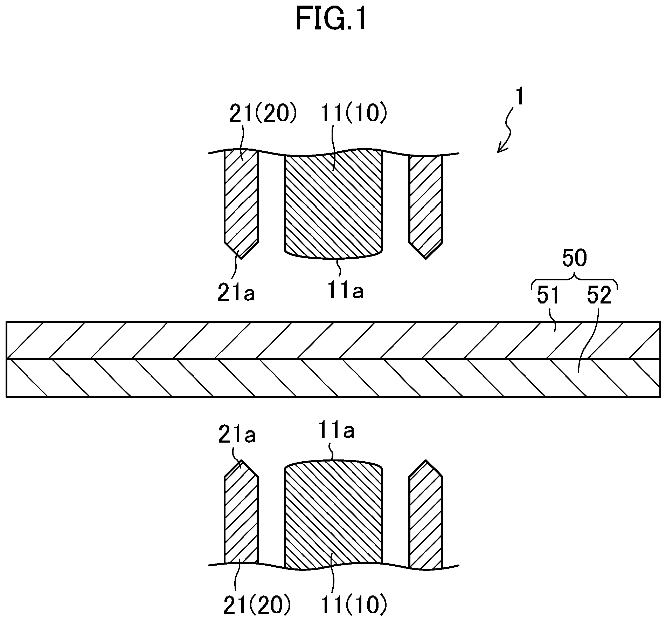

FIG. 1 shows a main part of a resistance welding apparatus 1, according to an embodiment. The resistance welding apparatus 1 includes a welding system 10 that welds a plurality of (two, in this embodiment) welding target members 51 and 52 stacked on each other, and a fragile portion generating system 20 that generates a fragile portion in the welding target members 51 and 52. The two welding target members 51 and 52 are metal members (i.e., metal plates), and for example, one of them is an iron-based member (e.g., steel member with high strength and rigidity as in high-tensile steel), and the other one is an aluminum-based member (e.g., aluminum alloy). Alternatively, both of the welding target members 51 and 52 may be iron-based members. Hereinafter, the two welding target members 51 and 52 may be collectively referred to as a welding target 50.

The welding system 10 welds the welding target members 51 and 52 by supplying an electric current to the welding target members 51 and 52 through a pair of welding electrodes 11 each having a columnar shape. The pair of welding electrodes 11 are configured to respectively contact one side and the opposite side of the welding target 50 so as to sandwich the welding target 50 therebetween, and supply an electric current to the welding target 50. In the present embodiment, the pair of welding electrodes 11 are arranged to face each other in the upward and downward directions. Note that the directions in which the pair of welding electrodes 11 face each other are not limited to the upward and downward directions.

Distal ends of the welding electrodes 11, that is, contact portions 11a to contact the welding target 50 each has a curved surface slightly protruding towards the welding target 50. The curvature of the curved surfaces of these contacting portions 11a is appropriately set based on the operating conditions of the resistance welding apparatus 1, the materials of the contact portions 11a, and the life.

The pair of welding electrodes 11 are each configured to be movable upward and downward and capable of contacting and pressurizing the welding target 50 by a first pressurizing device (not shown). The first pressurizing device includes an air cylinder, a hydraulic cylinder, a servo motor, and the like. The electrode force of the pair of welding electrodes 11 to the welding target 50 is set to a value so that welding is properly performed.

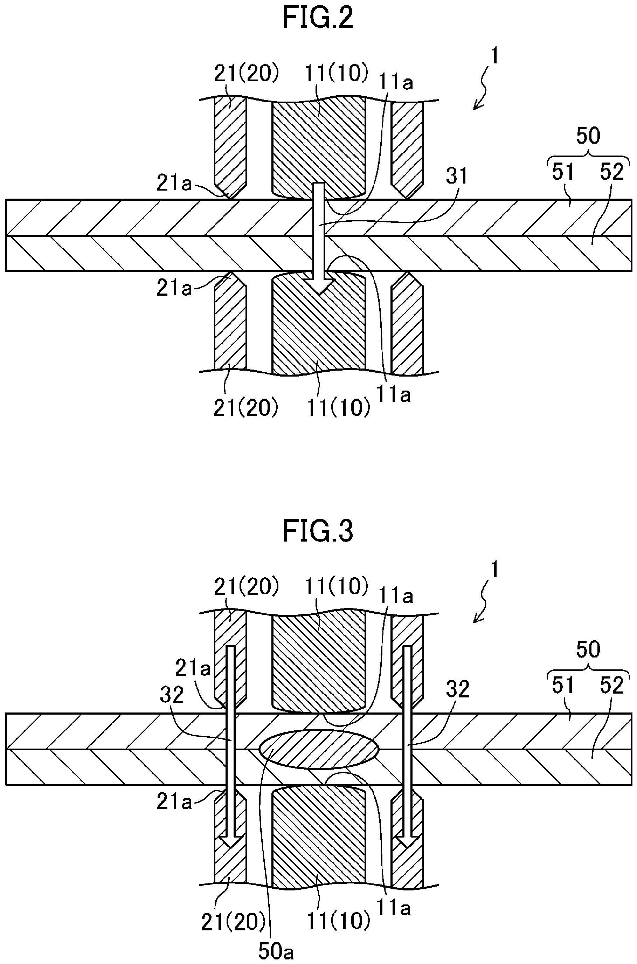

At a boundary between the welding target members 51 and 52 in a portion of the welding target 50 sandwiched by the pair of welding electrodes 11, a joining portion 50a (i.e., a nugget portion) occurs, which is a portion of the members joined by the welding (see FIG. 3 to FIG. 5).

The fragile portion generating system 20 generates, before, during, or after the welding by the welding system 10, a fragile portion in a position of the welding target 50 different from the portion joined by the welding (i.e., the joining portion 50), by supplying an electric current through a pair of fragile portion generating electrodes 21 separate from the welding electrodes 11, so as to form an electric current path different from that formed by the welding electrodes 11.

In the present embodiment, each of the fragile portion generating electrodes 21 is arranged on the outer circumferential side of corresponding one of the welding electrodes 11 throughout its entire circumferential direction, and distanced from the corresponding one of the welding electrodes 11. In other words, each fragile portion generating electrode 21 has a substantially cylindrical shape so as to surround the full circumference of the corresponding one of the welding electrodes 11. Each fragile portion generating electrode 21 is arranged near the outer circumferential side of the corresponding one of the welding electrodes 11. The pair of fragile portion generating electrodes 21 are also arranged to face each other in the upward and downward directions. In the present embodiment, each fragile portion generating electrode 21 is arranged coaxially with the corresponding one of the welding electrodes 11. However, these electrodes do not have to be coaxial. Note that each fragile portion generating electrode 21 does not have to be a tubular form continuous in the circumferential direction, and may be arranged in a part of the outer circumferential side of the corresponding one of the welding electrodes 11, relative to its circumferential direction.

A distal end of each fragile portion generating electrode 21, that is, the contact portion 21a to the welding target 50, has a sharp edge to form a ring-shaped recessed portion 50b (i.e., notch) as the fragile portion on the surface of the welding target 50.

The pair of fragile portion generating electrodes 21 are each configured to be movable upward and downward and capable of contacting and pressurizing the welding target 50, by a second pressurizing device (not shown) separate from the first pressurizing device that pressurizes the welding target 50 with the welding electrodes 11. Similarly to the first pressurizing device, the second pressurizing device also includes an air cylinder, a hydraulic cylinder, a servo motor, and the like.

In the present embodiment, the electrode force applied by the pair of the fragile portion generating electrodes 21 to the welding target 50 is greater than the electrode force applied by the pair of welding electrodes 11 to the welding target 50. This is for forming the recessed portion 50b on the surface of the welding target 50. In a case where the recessed portion 50b is not formed and only a heat affected part 50c described later is formed, the electrode force applied by the pair of fragile portion generating electrodes 21 to the welding target 50 may be substantially the same or smaller than the electrode force applied by the pair of welding electrodes 11 to the welding target 50.

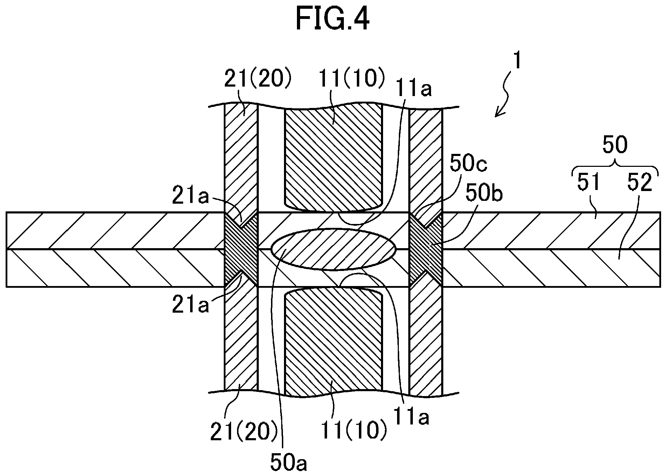

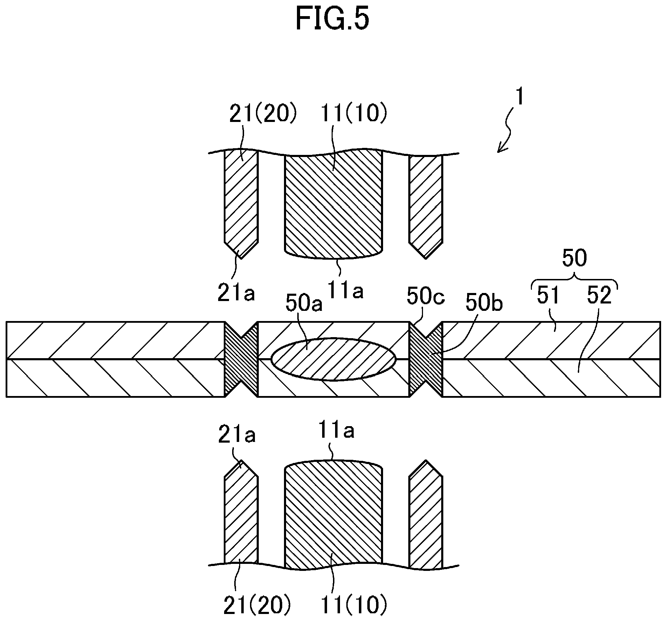

In addition to the recessed portion 50b, the fragile portion generating system 20 of the present embodiment forms the heat affected part 50c (see FIG. 4 and FIG. 5) as the fragile portion in a portion of the welding target 50 sandwiched by the pair of fragile portion generating electrodes 21, by supplying an electric current through the pair of fragile portion generating electrodes 21. The electric current value at this time is smaller than the electric current value at the time of welding. The portion of the welding target 50 where the heat affected part 50c is generated is easily deformable as compared to the other portions, even without the recessed portion 50b. Note that the fragile portion may be one of the recessed portion 50b and the heat affected part 50c. In a case of forming only the recessed portion 50b, the electric current value is further reduced and the electrode force is further increased.

In the present embodiment, the recessed portion 50b and the heat affected part 50c are formed near the outer circumferential side of the joining portion 50a throughout its entire circumferential direction. Note that the recessed portion 50b and the heat affected part 50c may be formed in a part of the circumferential direction on the outer circumferential side of the joining portion 50a, corresponding to the arrangement of the fragile portion generating electrodes 21. In one preferred embodiment, the recessed portion 50b and the heat affected part 50c in such a case are formed at least on a transmission path of a load to the joining portion 50 that acts on the welding target 50.

To join the welding target members 51 and 52 through welding by the resistance welding apparatus 1 configured as described above, the first and the second pressurizing devices first bring the pair of welding electrodes 11 and the pair of the fragile portion generating electrodes 21 into contact with the welding target 50 to pressurize the welding target 50, as shown in FIG. 2. At this stage, the recessed portion 50b is not formed unless an electric current is supplied between the pair of fragile portion generating electrodes 21.

Here, the fragile portion (i.e., the recessed portion 50b and the heat affected part 50c) is formed after the welding. Therefore, the second pressurizing device may bring the pair of fragile portion generating electrodes 21 into contact with the welding target 50 to pressurize the welding target 50, after the welding. Note that the fragile portion may be formed in parallel with the welding, or before the welding.

Then, while the pair of welding electrodes 11 contact and pressurize the welding target 50, an electric current is supplied between the pair of welding electrodes 11 to weld the welding target members 51 and 52. An electric current path at this time is indicated by the arrow 31 in FIG. 2. With this electric current supplied, the joining portion 50a (see FIG. 3) is generated at a boundary between the welding target members 51 and 52 in a portion of the welding target 50 sandwiched by the pair of welding electrodes 11, thus joining the welding target members 51 and 52.

After the welding, as shown in FIG. 3, an electric current is supplied between the pair of fragile portion generating electrodes 21, while the pair of fragile portion generating electrodes 21 contact and pressurize the welding target 50, thereby forming the recessed portion 50b and the heat affected part 50c as the fragile portion (see FIG. 4 and FIG. 5). An electric current path at this time is indicated by the arrow 32 in FIG. 3. The electric current path indicated by the arrow 32 is different from the electric current path indicated by the arrow 31. On this electric current path indicated by the arrow 32, the heat affected part 50c is generated. Further, since the portion where the heat affected part 50c is generated is pressurized by the pair of fragile portion generating electrodes 21, the recessed portion 50b is formed on the surface (i.e., the surface of the portion where the heat affected part 50c is generated) of the welding target 50, by the contact portion 21a of each fragile portion generating electrode 21.

After the fragile portion is formed, the pair of welding electrodes 11 and the pair of fragile portion generating electrodes 21 are separated from the welding target members 51 and 52, as shown in FIG. 5, thus completing the joining of the welding target members 51 and 52.

In the present embodiment, the fragile portion generating electrodes 21 separate from the welding electrodes 11 form a fragile portion in a position apart from the position of the welding target 50 where the welding takes place (in the present embodiment, throughout the entire circumferential direction on the outer circumferential side of the joining portion 50a). Therefore, the fragile portion can be stably and easily formed.

When a load to tear apart the joining acts on the welding target members 51 and 52 joined with each other as described above, stress tends to converge in the joining portion 50a, if there is no fragile portion. Particularly, when one of the two welding target members 51 and 52 is a member with high strength and rigidity as is the case of high-tensile steel, that member is hardly deformable, and the stress further converges in the joining portion 50a, if there is no fragile portion.

In the present embodiment, however, the fragile portion deforms when the load to tear apart the joining acts on the welding target members 51 and 52, thereby restricting the stress from being converged in the joining portion 50a. Since such a fragile portion can be stably and easily formed, fractures in the joining portion 50a can be stably and easily suppressed. Further, suppression of fractures in the joining portion 50a allows improved joining strength between the welding target members 51 and 52.

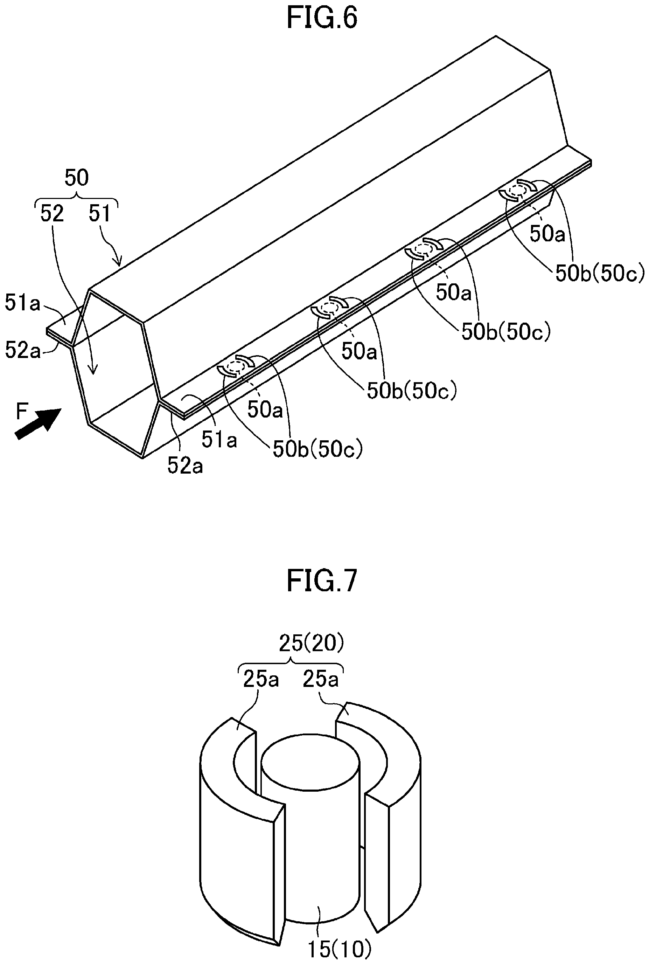

A specific example of a welded welding target 50 (i.e., welding target members 51 and 52 stacked and weld-joined with each other) is shown in FIG. 6. The welding target 50 is a frame member extended in front and back directions of a motor vehicle. In a case where the motor vehicle collides, a collision load F acts from one side of the frame member relative to the length direction.

The welding target member 51 has a flange portion 51a on both left and right sides to form a hat-like cross sectional shape. The welding target member 52 also has a flange portion 52a on both left and right sides to form a hat-like cross sectional shape. The flange portions 51a and 52a on both left and right sides of the welding target members 51 and 52 are stacked on each other and welded at a plurality of positions (see joining portions 50a indicated by broken lines). The fragile portion (in this example, the recessed portion 50b and the heat affected part 50c) is formed in each portion on both front and back radially outer portions of each joining portion 50a.

In the present example, the welding system 10 includes a pair of welding electrodes 15 as shown in FIG. 7 that face each other so as to sandwich the flange portions 51a and 52a (FIG. 7 only shows one welding electrode 15 on one side). The welding electrodes 15 each has a substantially columnar shape similar to the welding electrodes 11, and generate a joining portion 50a between the flange portions 51a and 52a by supplying an electric current through the welding electrodes 15 similar to the welding electrodes 11. The pair of welding electrodes 15 successively generates a joining portion 50a in positions needed to be welded while moving in the length direction of the frame member.

The fragile portion generating system 20 includes a pair of fragile portion generating electrodes 25 as shown in FIG. 7 that face each other so as to sandwich the flange portions 51a and 52a therebetween (FIG. 7 only shows the fragile portion generating electrode 25 on one side). Each of the fragile portion generating electrodes 25 includes two arc-shaped electrodes 25a which are separate from each other in the circumferential direction, and respectively arranged in two positions on the outer circumferential side of the welding electrode 15 so as to face each other in radial directions. A distal end of each of the arc-shaped electrodes 25a has a sharp edge similar to the fragile portion generating electrodes 21. Therefore, by supplying an electric current through the fragile portion generating electrodes 25 (i.e., through the arc-shaped electrodes 25a), a fragile portion (i.e., recessed portion 50b and the heat affected part 50c) is generated on both front and back side portions of each joining portion 50a in the flange portions 51a and 52a. The pair of fragile portion generating electrodes 25 form a fragile portion on both front and back side portions of each joining portion 50a in the flange portions 51a and 52a, while moving in the length direction of the frame member along with the pair of the welding electrodes 15. In this example too, the fragile portion may be one of the recessed portion 50b and the heat affected part 50c.

When a collision load F acts on this frame member from one side of its length direction, a load to tear apart the joining acts on each joining portion 50a of both left and right side flange portions 51a and 52a. At this time, if no fragile portion is generated in both of the front and back side portions of each joining portion 50a, stress is converged in the joining portion 50a. Then, one of the joining portions 50a may be first fractured, followed by fractures in the other joining portions 50a in a chain reaction.

However, in the present example, the fragile portion (i.e., the recessed portion 50b and the heat affected part 50c) generated in each portion (portion on the transmission path of the collision load F) on both front and back sides of each joining portion 50a is deformed. This deformation of the fragile portion restricts the stress from being converged in the joining portion 50a. This suppresses fractures in the joining portion 50a, and improves an impact absorption capacity of the frame member.

The technique disclosed herein is not limited to the above-described embodiments.

For example, the above embodiment deals with a case where an electrode that generates the fragile portion (i.e., fragile portion generating electrode 21) is a separate electrode from the electrode for welding (i.e., the welding electrode 11). However, the electrode to generate a fragile portion may be the electrode for welding. For example, the electrode for welding may include an interior electrode similar to the welding electrode 11 or the welding electrode 15, and an exterior electrode similar to the fragile portion generating electrode 21 and the fragile portion generating electrode 25, and may be configured so that the exterior electrode serves as the electrode to generate the fragile portion. At a time of welding, in this case, an electric current may be supplied between the interior electrode located on one side of the welding target 50 and the exterior electrode located on another side of the welding target 50, or between the exterior electrode located on one side of the welding target 50 and the interior electrode located on the other side of the welding target 50.

The foregoing embodiment is a merely preferred example in nature, and the scope of the present invention should not be interpreted in a limited manner. The scope of the present invention should be defined by the appended claims, and all the modifications and changes which fall within the scope of the appended claims are within the scope of the present invention.

## Claims

1. A resistance welding method, comprising:
welding a plurality of welding target members (51, 52) by supplying an electric current through electrodes (11, 15); and
generating a fragile portion (50b, 50c) in a position of the welding target members different from a position subject to the welding by using electrodes (21, 25) separate from the electrodes for the welding, before, during, or after the welding is performed,
**characterized in that**
each of the electrodes (21, 25) for generating the fragile portion (50b, 50c) is arranged in at least a part of a circumferential direction on an outer circumferential side of corresponding one of the electrodes (11, 15) for the welding, and is distanced from the corresponding one of the electrodes (11, 15) for the welding.

2. The resistance welding method of claim 1, wherein:
the generating of the fragile portion generates a heat affected part (50c) as the fragile portion.

3. The resistance welding method of claim 1, wherein:
the generating of the fragile portion generates a recessed portion (50b) as the fragile portion on a surface of the welding target members (51, 52).

4. The resistance welding method of any one of claims 1 to 3, wherein:
the welding welds an iron-based member and an aluminum-based member as the plurality of welding target members (51, 52).

5. A resistance welding apparatus (1), comprising:
a welding system (10) that welds a plurality of welding target members (51, 52) by supplying an electric current through electrodes (11, 15); and
a fragile portion generating system (20) that generates a fragile portion (50b, 50c) in a position of the welding target members (51, 52) different from a position subject to the welding by using electrodes (21, 25) separate from the electrodes (11, 15) for the welding, before, during, or after the welding by the welding system (10) is performed
**characterized in that**
the electrode (21, 25) for generating the fragile portion (50b, 50c) is arranged in at least a part of a circumferential direction on the outer circumferential side of the electrode (11, 15) for welding.

6. The resistance welding apparatus (1) of claim 5, wherein:
the fragile portion generating system (20) is configured to generate a heat affected part (50c) as the fragile portion.

7. The resistance welding apparatus (1) of claim 5, wherein:
the fragile portion generating system (20) is configured to generate a recessed portion (50b) as the fragile portion on a surface of the welding target members (51, 52).

8. The resistance welding apparatus (1) of any one of claims 5 to 7, wherein:
the welding system (10) is configured to weld an iron-based member and an aluminum-based member as the plurality of welding target members (51, 52).

## Patentansprüche

1. Widerstandsschweißverfahren, umfassend:
Schweißen einer Vielzahl von Schweißzielelementen (51, 52) durch Zuführen eines elektrischen Stroms durch Elektroden (11, 15); und
Erzeugen eines fragilen Abschnitts (50b, 50c) an einer Position der Schweißzielelemente, die sich von einer Position unterscheidet, die dem Schweißen unterzogen wird, durch Verwenden von Elektroden (21, 25), die von den Elektroden für das Schweißen getrennt sind, vor, während, oder nach dem Durchführen des Schweißens,
**dadurch gekennzeichnet, dass**
jede der Elektroden (21, 25) zum Erzeugen des fragilen Abschnitts (50b, 50c) in zumindest einem Teil einer Umfangsrichtung auf einer Außenumfangsseite einer entsprechenden einen der Elektroden (11, 15) zum Schweißen angeordnet ist, und von der entsprechenden einen der Elektroden (11, 15) zum Schweißen beabstandet ist.

2. Widerstandsschweißverfahren nach Anspruch 1, wobei:
das Erzeugen des fragilen Abschnitts einen hitzebeeinflussten Teil (50c) als den fragilen Abschnitt erzeugt.

3. Widerstandsschweißverfahren nach Anspruch 1, wobei:
das Erzeugen des fragilen Abschnitts einen vertieften Abschnitt (50b) als den fragilen Abschnitt auf einer Oberfläche der Schweißzielelemente (51, 52) erzeugt.

4. Widerstandsschweißverfahren nach einem der Ansprüche 1 bis 3, wobei:
das Schweißen ein eisenbasiertes Element und ein aluminiumbasiertes Element als die Vielzahl von Schweißzielelementen (51, 52) schweißt.

5. Widerstandsschweißvorrichtung (1), aufweisend:
ein Schweißsystem (10), das eine Vielzahl von Schweißzielelementen (51, 52) durch Zuführen eines elektrischen Stroms durch Elektroden (11, 15) schweißt;
ein System zur Erzeugung eines fragilen Abschnitts (20), das einen fragilen Abschnitt (50b, 50c) an einer Position der Schweißzielelemente (51, 52) erzeugt, die sich von einer Position unterscheidet, die dem Schweißen unterzogen wird, durch Verwenden von Elektroden (21, 25), die von den Elektroden (11, 15) für das Schweißen getrennt sind, vor, während, oder nach dem Durchführen des Schweißens durch das Schweißsystem (10),
**dadurch gekennzeichnet, dass**
die Elektrode (21, 25) zum Erzeugen des fragilen Abschnitts (50b, 50c) in zumindest einem Teil einer Umfangsrichtung auf der Außenumfangsseite der Elektrode (11, 15) zum Schweißen angeordnet ist.

6. Widerstandsschweißvorrichtung (1) nach Anspruch 5, wobei:
das System zur Erzeugung eines fragilen Abschnitts (20) dazu konfiguriert ist, einen hitzebeeinflussten Teil (50c) als den fragilen Abschnitt zu erzeugen.

7. Widerstandsschweißvorrichtung (1) nach Anspruch 5, wobei:
das System zur Erzeugung eines fragilen Abschnitts (20) dazu konfiguriert ist, einen vertieften Abschnitt (50b) als den fragilen Abschnitt auf einer Oberfläche des Schweißzielelements (51, 52) zu erzeugen.

8. Widerstandsschweißvorrichtung (1) nach einem der Ansprüche 5 bis 7, wobei:
das Schweißsystem (10) dazu konfiguriert ist, ein eisenbasiertes Element und ein aluminiumbasiertes Element als die Vielzahl von Schweißzielelementen (51, 52) zu schweißen.

## Revendications

1. Procédé de soudage par résistance, le procédé comprenant :
le soudage d'une pluralité d'éléments cibles de soudage (51, 52) au moyen de l'apport d'un courant électrique à travers des électrodes (11, 15) ; et
la production d'une portion fragile (50b, 50c) dans une position des éléments cibles de soudage différente d'une position soumise au soudage, à l'aide d'électrodes (21, 25) séparées des électrodes utilisées pour le soudage, avant, pendant ou après la réalisation du soudage,
**caractérisé en ce que**
chaque électrode (21, 25), permettant de produire la portion fragile (50b, 50c), est disposée dans au moins une partie d'une direction circonférentielle sur un côté circonférentiel externe d'une électrode correspondante parmi les électrodes (11, 15) utilisées pour le soudage, et à distance de l'électrode correspondante parmi les électrodes (11, 15) utilisées pour le soudage.

2. Le procédé de soudage par résistance de la revendication 1, dans lequel :
la production de la portion fragile produit une partie affectée par la chaleur (50c) en tant que portion fragile.

3. Le procédé de soudage par résistance de la revendication 1, dans lequel :
la production de la portion fragile produit une portion évidée (50b) en tant que portion fragile sur une surface des éléments cibles de soudage (51, 52).

4. Le procédé de soudage par résistance de l'une quelconque des revendications 1 à 3, dans lequel :
le soudage soude un élément à base de fer et un élément à base d'aluminium en tant que pluralité d'éléments cibles de soudage (51, 52).

5. Appareil (1) de soudage par résistance, l'appareil comprenant :
un système (10) de soudage qui fait le soudage d'une pluralité d'éléments cibles de soudage (51, 52) au moyen de l'apport d'un courant électrique à travers des électrodes (11, 15) ; et
un système (20) de production d'une portion fragile qui produit une portion fragile (50b, 50c) dans une position des éléments cibles de soudage (51, 52) différente d'une position soumise au soudage, à l'aide d'électrodes (21, 25) séparées des électrodes (11, 15) utilisées pour le soudage, avant, pendant ou après la réalisation du soudage par le système (10) de soudage,
**caractérisé en ce que**
l'électrode (21, 25) permettant de produire la portion fragile (50b, 50c) est disposée dans au moins une partie d'une direction circonférentielle sur le côté circonférentiel externe de l'électrode (11, 15) utilisée pour le soudage.

6. L'appareil (1) de soudage par résistance de la revendication 5, dans lequel :
le système (20) de production de la portion fragile est configuré pour produire une partie affectée par la chaleur (50c) en tant que portion fragile.

7. L'appareil (1) de soudage par résistance de la revendication 5, dans lequel :
le système (20) de production de la portion fragile est configuré pour produire une portion évidée (50b) en tant que portion fragile sur une surface des éléments cibles de soudage (51, 52).

8. L'appareil (1) de soudage par résistance de l'une quelconque des revendications 5 à 7, dans lequel :
le système (10) de soudage est configuré pour souder un élément à base de fer et un élément à base d'aluminium en tant que pluralité d'éléments cibles de soudage (51, 52).
